# FASCICULE DE BREVET EUROPEEN

(11) **EP 2 117 216 B1**
(45) Date de publication et mention de la délivrance du brevet: **20.07.2011**
(21) Numéro de dépôt: 09159672.6
(22) Date de dépôt: 07.05.2009
(51) Int. Cl.: H04M 3/51

(54) **Procédé et dispositif de contrôle d'autorisations de supervision d'appels en fonction de règles**
Verfahren und Vorrichtung zur Kontrolle der Überwachungsbefugnisse von Anrufen gemäß Regeln
Method and device for controlling call supervision authorisations according to a set of rules

(30) Priorité: 07.05.2008 FR 0853021
(43) Date de publication de la demande: 11.11.2009
(73) Titulaire: Alcatel Lucent, 75008 Paris (FR)
(72) Inventeur: Rey, Jean-François, 29200, BREST (FR); Litteaut, Jacques, 78160, MARLY LE ROI (FR); Coulon, Stéphane, 95810, ARRONVILLE (FR)
(74) Mandataire: Sciaux, Edmond

(56) Documents cités:
- WO-A-99/43137
- WO-A-2005/043877

## Description

L'invention concerne le domaine des communications téléphoniques entre appelants et appelés, et plus précisément le contrôle par des personnes équipées d'au moins un terminal de communication d'appels que l'on tente d'établir entre des terminaux de communication d'appelant et des terminaux de communication d'appelés.

Comme le sait l'homme de l'art, dans certaines entreprises un équipement de communication, comme par exemple un serveur de télécommunications (éventuellement de type PBX), peut être chargé de router les appels qui concernent certains au moins des salariés en fonction d'informations de routage spécifiques. Certaines de ces informations désignent au moins un salarié de l'entreprise, généralement appelé « superviseur », qui doit être averti (par un message et/ou une sonnerie) lorsqu'un appel entrant (c'est-à-dire issu de l'extérieur du réseau de communication de l'entreprise) concerne un autre salarié de l'entreprise auquel il est associé. Plus précisément, lorsque le serveur de télécommunications de l'entreprise reçoit un appel entrant d'un appelant désignant l'identifiant de communication du terminal d'entreprise d'un appelé salarié qui est connecté à lui, il détermine dans des moyens de stockage si cet identifiant désigné est stocké en correspondance d'un identifiant de communication d'au moins un terminal de superviseur, et dans l'affirmative il tente d'établir la communication avec l'appelé et avertit chaque superviseur auquel ce dernier est associé. Le superviseur averti peut alors, notamment, répondre à l'appelant si l'appelé qu'il supervise n'est pas en mesure de le faire. Le superviseur peut être également averti des appels sortants émis par un salarié de l'entreprise.

On notera que l'on peut envisager que plusieurs, voire même tous les salariés appartenant à un même groupe de travail ou d'activité soient à la fois supervisés et superviseurs au sein du groupe selon qu'ils sont ou non concernés par un appel.

En raison de ce mode de fonctionnement, tous les appels entrants ou sortants concernant un salarié supervisé peuvent être contrôlés par son (ses) superviseur(s), y compris ceux qui revêtent un caractère privé ou personnel et ceux qui sans avoir de caractère privé ne concernent pas le(s) superviseur(s), par exemple du fait qu'ils concernent un autre groupe de travail ou d'activité auquel appartient également le salarié supervisé appelé ou appelant.

Afin que certains appels à caractère privé ou personnel ne soient pas contrôlés, il est possible d'attribuer aux salariés un identifiant de communication d'entreprise et un identifiant de communication privé qui adressent tous les deux son terminal d'entreprise. Mais, on comprendra que cette solution ne résout que très partiellement le problème, puisqu'elle ne permet pas d'empêcher qu'un superviseur, d'un groupe de travail ou d'activité auquel appartient un salarié supervisé appelé, contrôle un appel désignant un identifiant (de communication) d'entreprise et concernant un autre groupe de travail ou d'activité qu'il ne supervise pas. En outre cette solution impose que l'appelant connaisse l'identifiant de communication privé de l'appelé.

Par ailleurs, un appelant peut souhaiter à un moment donné joindre un appelé de façon « personnelle » sans que cet appel ne soit supervisé, alors que le reste du temps ses appels vers cet appelé sont soumis à une supervision car non personnels.

L'invention a donc pour but d'améliorer la situation, et plus particulièrement de permettre un contrôle des autorisations de supervision des appels entrants comme des appels sortants au moyen de règles de supervision.

Elle propose à cet effet un procédé, dédié au contrôle d'autorisations de supervision d'appels, et consistant, lorsqu'un terminal de communication d'un appelant appelle un terminal de communication d'un appelé :
i) à déterminer si un identifiant d'appelant associé au terminal de l'appelant est associé à un identifiant de l'appelé au sein d'au moins une règle autorisant ou interdisant au moins partiellement la supervision des appels entre cet appelant et cet appelé par au moins un superviseur d'appels de l'appelé ou de l'appelant, et
ii) en cas de règle autorisant au moins partiellement la supervision de l'appel, à autoriser au moins l'avertissement d'un terminal du superviseur d'appels de l'appelé ou de l'appelant, tandis qu'en cas de règle interdisant la supervision de l'appel, à interdire l'avertissement d'un terminal du superviseur d'appels de l'appelé ou de l'appelant.

On entend ici par « supervision » le fait d'être averti d'un appel et/ou de pouvoir contrôler cet appel en décrochant.

Le procédé selon l'invention peut comporter d'autres caractéristiques qui peuvent être prises séparément ou en combinaison, et notamment :
- au ii), en l'absence de règle concernant l'appel, on peut soit autoriser par défaut, soit interdire par défaut la supervision au moins partielle du terminal du superviseur d'appels de l'appelé ou de l'appelant;
- on peut définir une règle de supervision préalablement à un appel en établissant une correspondance entre un identifiant, un autre identifiant et une autorisation ou une interdiction au moins partielle de supervision d'appel par au moins un superviseur d'appels ;
- en variante ou en complément, on peut définir une règle de supervision en établissant pendant un appel une correspondance entre un identifiant, un autre identifiant et une autorisation ou une interdiction au moins partielle de supervision d'appel par au moins un superviseur d'appels;
- en variante ou en complément, on peut définir une règle de supervision après que la communication ait été établie et supervisée entre le terminal de l'appelant et le terminal de l'appelé, grâce à un élément d'information (suffixe ou signalisation) spécifiant qu'une règle prenant en compte les participants à l'appel (appelant et appelé) doit être établie ;
- en variante ou en complément, on peut définir une règle de supervision à usage momentané lors de l'initiation de l'appel entre le terminal de l'appelant et le terminal de l'appelé, grâce à un élément d'information (préfixe ou signalisation) fourni par l'appelant et spécifiant qu'une règle prenant en compte les participants à l'appel (appelant et appelé) doit être momentanément établie pour la durée de leur appel ;
- au ii), on peut délivrer l'autorisation ou l'interdiction au moins partielle de supervision avant ou après que la communication ait été établie entre le terminal de l'appelant et le terminal de l'appelé.

L'invention propose également un dispositif, dédié au contrôle d'autorisations de supervision d'appels, et comprenant des moyens d'interrogation chargés, lorsqu'ils sont avertis qu'un terminal de communication d'un appelant tente d'appeler un terminal de communication d'un appelé :
- d'accéder à des moyens de stockage, stockant des règles autorisant ou interdisant chacune une supervision au moins partielle des appels entre un appelant (désigné par un identifiant d'appelant) et un appelé (désigné par un identifiant d'appelé), par au moins un superviseur d'appels, de manière à déterminer si l'identifiant d'appelant (associé au terminal de l'appelant) est associé à un identifiant de l'appelé au sein d'au moins une règle, et
- en cas de règle autorisant au moins partiellement la supervision de l'appel, d'autoriser au moins l'avertissement d'un terminal du superviseur d'appels de l'appelé ou de l'appelant, et en cas de règle interdisant la supervision de l'appel, d'interdire l'avertissement d'un terminal du superviseur d'appels de l'appelé ou de l'appelant.

Le dispositif selon l'invention peut comporter d'autres caractéristiques qui peuvent être prises séparément ou en combinaison, et notamment :
- il peut comprendre les moyens de stockage ;
- ses moyens d'interrogation peuvent être chargés, en l'absence de règle concernant l'appel, soit d'autoriser par défaut, soit d'interdire par défaut la supervision au moins partielle du terminal du superviseur d'appels de l'appelé ou de l'appelant ;
- il peut comprendre des moyens de configuration chargés de contrôler le stockage des règles de supervision dans les moyens de stockage ;
- il peut comprendre des moyens de configuration chargés de définir une règle de supervision en cas de réception, consécutivement à l'établissement d'une communication entre un terminal d'un appelant et un terminal d'un appelé et à la supervision de cette communication par un superviseur d'appels, d'un élément d'information fourni par l'appelant ou l'appelé et spécifiant qu'une règle doit être établie pour cet appelant, cet appelé et ce superviseur d'appels ;
- il peut comprendre des moyens de configuration chargés de définir une règle de supervision à usage momentané en cas de réception, consécutivement à l'initiation d'une communication entre un terminal d'un appelant et un terminal d'un appelé, d'un élément d'information fourni par l'appelant et spécifiant qu'une règle doit être établie pour cet appelant et cet appelé pour la durée de leur appel.

L'invention propose également un équipement de communication comprenant un dispositif de contrôle du type de celui présenté ci-avant.

D'autres caractéristiques et avantages de l'invention apparaîtront à l'examen de la description détaillée ci-après, et des dessins annexés, sur lesquels :
- la figure 1 illustre de façon très schématique et fonctionnelle un serveur de télécommunications équipé d'un premier exemple de réalisation d'un dispositif de contrôle selon l'invention et auquel sont couplés des terminaux d'appelant, d'appelé et de superviseur, et
- la figure 2 illustre de façon très schématique et fonctionnelle un serveur de télécommunications équipé d'un second exemple de réalisation d'un dispositif de contrôle selon l'invention et auquel sont couplés des terminaux d'appelant, d'appelé et de superviseur et un serveur d'informations.

Les dessins annexés pourront non seulement servir à compléter l'invention, mais aussi contribuer à sa définition, le cas échéant.

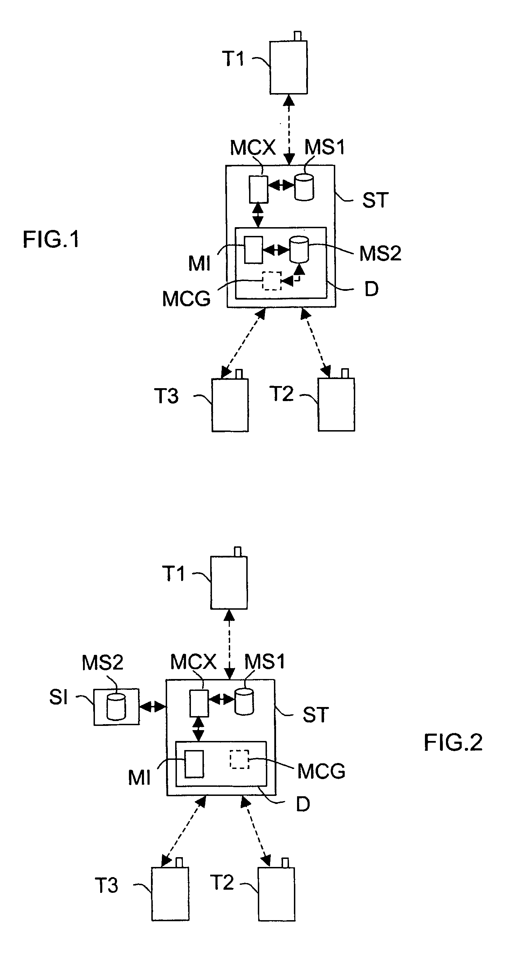

Comme cela est schématiquement illustré sur les figures 1 et 2, la mise en oeuvre de l'invention requiert au moins un équipement de communication ST, comme par exemple un serveur de télécommunications (éventuellement de type PBX), appartenant par exemple à une entreprise (ou administration, ou analogue), connecté à un réseau de communication public et à un réseau de communication privé de l'entreprise, éventuellement de type Intranet, et chargé de router les appels (ou communications) concernant les personnes (par exemple les salariés de l'entreprise) dont les terminaux de communication d'entreprise (ici référencés T2 et T3) sont connectés à lui, directement (par exemple via le réseau privé d'entreprise) ou indirectement (par exemple via un réseau de communication non filaire).

On considère dans ce qui suit, à titre d'exemple non limitatif, que les terminaux de communication d'entreprise T2 et T3 sont des téléphones filaires d'entreprise, de préférence de type applicatif et fonctionnant éventuellement sur IP (« Internet Protocol »). Mais, l'invention n'est pas limitée à ce type de terminal de communication. Elle concerne en effet tout type de terminal de communication, filaire ou non filaire, permettant à une personne de communiquer de façon téléphonique avec une autre personne équipée d'un autre terminal de communication (éventuellement d'un type différent). Par conséquent, il pourra également s'agir d'un téléphone fixe analogique, d'un téléphone mobile, d'un ordinateur fixe ou portable, ou d'un assistant numérique personnel (ou PDA), équipé d'un module de communication téléphonique.

L'invention propose de mettre en oeuvre un procédé permettant de contrôler les autorisations de supervision des appels entrants (c'est-à-dire reçus par un terminal de communication) comme des appels sortants (c'est-à-dire émis par un terminal de communication).

Ce procédé comprend deux étapes principales qui peuvent par exemple être mises en oeuvre au moyen d'un dispositif de contrôle D du type de celui qui est illustré (de façon non limitative) sur la figure 1 ou la figure 2.

Dans cet exemple non limitatif, le dispositif de contrôle D est implanté dans le serveur de télécommunications ST de l'entreprise. Mais, ce dispositif de contrôle D pourrait être couplé au serveur de télécommunications ST.

Une première étape principale du procédé (i) est effectuée chaque fois qu'un terminal d'un appelant (associé à un identifiant d'appelant, comme par exemple un numéro de téléphone ou une adresse IP) veut établir une communication téléphonique avec un terminal d'un appelé (également associé à un identifiant d'appelé, comme par exemple un numéro de téléphone ou une adresse IP), et que le terminal de l'appelant ou de l'appelé est connecté au serveur de télécommunications ST.

En fait, cette première étape principale est déclenchée par un module de communication MCX du serveur de télécommunications ST lorsqu'il reçoit un appel entrant ou sortant. Dans ce cas, le module de communication MCX commence par accéder à des premiers moyens de stockage MS1 dans lesquels sont stockés des multiplets d'informations. Un multiplet d'informations comprend un identifiant IDij, par exemple de communication, d'un salarié de l'entreprise, et au moins un identifiant de groupe Gi et/ou au moins un identifiant de superviseur IDij' (avec j' ≠ j), par exemple de communication, ainsi qu'éventuellement d'identifiants de groupe Gi. L'indice i désigne ici un groupe de travail ou d'activité (i = 1 à N (avec N ≥1)), et l'indice j désigne ici un salarié de l'entreprise appartenant à un groupe de travail ou d'activité (Gi) (j = 1 à M (avec M ≥1)).

Les premiers moyens de stockage MS1 peuvent se présenter sous toute forme connue de l'homme de l'art, et notamment sous la forme d'une mémoire ou d'une base de données. Par exemple, et comme illustré, ils peuvent faire partie du serveur de télécommunications ST. Mais, cela n'est pas obligatoire.

L'accession aux moyens de stockage MS1 permet au serveur de télécommunications ST de déterminer si l'identifiant de l'appelant (ou de l'appelé) s'y trouve stocké en correspondance de l'identifiant de l'appelé (ou de l'appelant) ainsi qu'éventuellement d'au moins un identifiant de superviseur et/ou d'au moins un identifiant de groupe Gi. Dans l'affirmative, le serveur de télécommunications ST fournit à son dispositif de contrôle D l'identifiant de l'appelant et l'identifiant de l'appelé, ainsi qu'éventuellement l'identifiant de chaque superviseur correspondant et/ou de chaque identifiant de groupe correspondant, afin qu'il intervienne.

La première étape principale du procédé (i) consiste à déterminer si un identifiant d'appelant, qui est associé au terminal de l'appelant, est associé à un identifiant de l'appelé au sein d'au moins une règle qui autorise ou interdit la supervision au moins partielle des appels entre cet appelant et cet appelé par au moins un superviseur d'appels de l'appelé ou de l'appelant.

Il est rappelé que l'on entend ici par « supervision » le fait d'être averti d'un appel et/ou de pouvoir contrôler cet appel en décrochant. Par conséquent, une supervision peut être limitée au seul avertissement, ou bien complète et donc comporter un avertissement et une possibilité de contrôle de l'appel par un décrochage.

Par exemple, une règle de supervision indique que chaque appel concernant à la fois l'identifiant d'un appelant donné et l'identifiant d'un appelé donné est autorisé à être supervisé (partiellement ou complètement) par un ou plusieurs superviseurs d'identifiants donnés. Une autre règle de supervision peut par exemple indiquer que chaque appel concernant à la fois l'identifiant d'un appelant donné et l'identifiant d'un appelé donné n'est pas autorisé à être supervisé (partiellement ou complètement) par un ou plusieurs superviseurs d'identifiants donnés, voire même par n'importe quel superviseur. Cela peut par exemple être le cas pour un appel personnel entre le département des ressources humaines d'une entreprise et un salarié de cette entreprise.

Cette détermination peut être effectuée par un module d'interrogation MI du dispositif de contrôle D au sein de seconds moyens de stockage MS2 qui stockent les règles de supervision.

Ce stockage consiste par exemple à établir des correspondances entre des couples d'identifiants et des couples d'identifiant de superviseur et d'autorisation ou d'interdiction de supervision partielle ou complète.

Ces seconds moyens de stockage MS2 peuvent se présenter sous toute forme connue de l'homme de l'art, et notamment sous la forme d'une mémoire ou d'une base de données. Dans l'exemple non limitatif illustré sur la figure 1, les seconds moyens de stockage MS2 font partie du dispositif de contrôle D. Mais, comme illustré non limitativement sur la figure 2 ils peuvent également faire partie d'un équipement de réseau SI, comme par exemple un serveur d'informations, couplé au serveur de télécommunications ST (ou au moins au dispositif de contrôle D). Dans une autre variante (non représentée), ils pourraient également faire partie du serveur de télécommunications ST.

Ainsi, lorsque le module d'interrogation MI reçoit du module de communication MCX un identifiant d'appelant et un identifiant d'appelé, ainsi qu'éventuellement l'identifiant de chaque superviseur correspondant et/ou de chaque identifiant de groupe correspondant, il accède aux seconds moyens de stockage MS2 afin de déterminer si ils stockent au moins une règle de supervision concernant le terminal de l'appelant (représenté par l'identifiant d'appelant reçu) et l'identifiant d'appelé reçu.

La deuxième étape principale du procédé (ii) est effectuée après cette détermination. Elle consiste, en cas de détermination d'une règle autorisant la supervision au moins partielle de l'appel de l'appelé ou de l'appelant par au moins un superviseur identifié, à autoriser au moins l'avertissement d'un terminal (par exemple T3) de ce superviseur par le module de communication MCX, afin qu'il puisse être averti de cet appel et éventuellement le contrôler (s'il le désire), et, en cas de règle interdisant la supervision de l'appel de l'appelé ou de l'appelant par au moins un superviseur identifié, à interdire l'avertissement d'un terminal de ce superviseur par le module de communication MCX.

On comprendra que le dispositif de contrôle D peut délivrer au module de communication MCX à la fois une autorisation d'au moins avertir au moins un superviseur et une interdiction d'avertir au moins un autre superviseur.

On rappellera qu'une règle de supervision peut comporter une autorisation de supervision complète (c'est-à-dire autorisant à la fois la notification de l'appel et le contrôle de cet appel) ou bien limitée (c'est-à-dire n'autorisant que la notification de l'appel).

Cette deuxième étape principale peut être mise en oeuvre par le module d'interrogation MI du dispositif de contrôle D.

On notera qu'en l'absence de règle de supervision concernant un appel entre un appelant et un appelé, on (ici le module d'interrogation MI) peut par exemple autoriser par défaut la supervision partielle ou complète du terminal de chaque superviseur auquel est associé l'appelé ou l'appelant dans les premiers moyens de stockage MS1. En variante, en l'absence de règle de supervision concernant un appel entre un appelant et un appelé, on (ici le module d'interrogation MI) peut par exemple interdire par défaut la supervision (et donc l'avertissement) de chaque superviseur auquel est associé l'appelé ou l'appelant dans les premiers moyens de stockage MS1.

Selon le mode de fonctionnement envisagé, le dispositif de contrôle D peut délivrer au module de communication MCX une autorisation et/ou une interdiction d'avertissement de superviseur(s) avant ou après que la communication ait été établie entre le terminal de l'appelant et le terminal de l'appelé.

Par exemple, et de préférence, lorsque l'on est en présence d'un appel sortant initié par un terminal d'entreprise d'un appelant (par exemple T2), on peut délivrer l'autorisation ou l'interdiction de supervision (au moins partielle) après que la communication ait été établie par le module de communication MCX entre le terminal de l'appelant T2 et le terminal de l'appelé (par exemple T1). En d'autres termes, dans cette première situation le module de communication MCX tente d'abord d'établir la communication demandée entre le terminal d'entreprise de l'appelant T2 et le terminal de l'appelé T1, puis il demande au dispositif de contrôle D si il est autorisé ou non à (au moins) avertir un ou plusieurs superviseurs, et si il reçoit une autorisation il avertit chaque superviseur (autorisé à superviser (au moins partiellement) la communication (ou l'appel)), tandis qu'en cas d'interdiction totale son intervention s'arrête là.

On notera que dans cette première situation le module de communication MCX peut avertir un superviseur en lui adressant un message textuel destiné à être affiché sur l'écran d'un terminal qu'il a sélectionné (ou qui est son seul terminal d'entreprise), éventuellement accompagné d'une sonnerie (ou mélodie) dédiée, et lui offrant éventuellement la possibilité de contrôler l'appel en décrochant.

Par exemple, et de préférence, lorsque l'on est en présence d'un appel entrant initié par un terminal d'un appelant extérieur à l'entreprise (par exemple T1), on peut délivrer l'autorisation ou l'interdiction de supervision (au moins partielle) avant que la communication ait été établie par le module de communication MCX entre le terminal de l'appelant T1 et le terminal d'entreprise de l'appelé (par exemple T2). En d'autres termes, dans cette seconde situation lorsque le module de communication MCX reçoit l'appel entrant du terminal de l'appelant T1, il commence par demander au dispositif de contrôle D si il est autorisé ou non à (au moins) avertir un ou plusieurs superviseurs, et si il reçoit une autorisation il tente d'établir la communication demandée entre le terminal de l'appelant T1 et le terminal d'entreprise de l'appelé T2, puis (ou sensiblement simultanément) il avertit chaque superviseur (autorisé à superviser (au moins partiellement) la communication (ou l'appel)), tandis qu'en cas d'interdiction totale il ne fait que tenter d'établir la communication demandée entre le terminal de l'appelant T1 et le terminal d'entreprise de l'appelé T2.

On notera que dans cette seconde situation le module de communication MCX peut avertir un superviseur en lui adressant un message textuel destiné à être affiché sur l'écran d'un terminal qu'il a sélectionné (ou qui est son seul terminal d'entreprise), ainsi qu'une sonnerie (éventuellement dédiée) afin qu'il puisse décrocher si l'appelé auquel il est associé n'est pas en situation de le faire.

On notera également que dans cette seconde situation si l'appelé ne décroche pas et qu'un superviseur averti par son terminal d'entreprise (par exemple T3) décroche, alors l'appelant peut communiquer avec ce superviseur. Maintenant, si ni l'appelé ni un superviseur averti ne décroche, alors l'appelant peut par exemple être invité à laisser un message audio dans la messagerie de l'appelé (laquelle est éventuellement consultable par ledit superviseur si l'appelé a donné son autorisation).

Bien entendu, d'autres exemples peuvent être envisagés. Notamment, l'exemple décrit ci-avant dans le cas d'un appel sortant peut éventuellement s'appliquer à un appel entrant, et inversement l'exemple décrit ci-avant dans le cas d'un appel entrant peut éventuellement s'appliquer à un appel sortant.

Les règles de supervision peuvent être définies par tout moyen connu de l'homme de l'art. Ainsi, une règle de supervision peut par exemple être définie au moyen d'une application qui est implantée dans un terminal d'entreprise (téléphone ou ordinateur) d'un salarié et qui permet à ce dernier d'établir, préalablement à un appel, une correspondance entre un identifiant (par exemple celui de son terminal d'entreprise), un autre identifiant (par exemple celui du terminal d'une personne choisie (faisant éventuellement partie de son entreprise)) et une autorisation ou une interdiction de supervision au moins partielle d'appel par au moins un superviseur d'appels.

En variante ou en complément, une option applicative peut par exemple permettre à un salarié d'établir pendant un appel établi et supervisé par un superviseur une correspondance entre l'identifiant de son terminal d'entreprise, l'identifiant du terminal de la personne avec laquelle il communique, l'identifiant du superviseur et une autorisation ou une interdiction de supervision au moins partielle d'appel par ce superviseur. Cela peut par exemple se faire par fourniture par l'appelé ou l'appelant d'un élément d'information, tel qu'un code alphanumérique (par exemple un suffixe ou une commande), en cours de communication. On notera que l'on peut par exemple prévoir un premier suffixe pour requérir la création d'une règle de supervision donnant une autorisation complète de supervision pour le couple d'identifiants de l'appelé et de l'appelant, un deuxième suffixe pour requérir la création d'une règle de supervision donnant une autorisation partielle de supervision pour le couple d'identifiants de l'appelé et de l'appelant, et un troisième suffixe pour requérir la création d'une règle de supervision interdisant la supervision pour le couple d'identifiants de l'appelé et de l'appelant. Dans ce cas, une nouvelle règle concernant le couple d'identifiants de l'appelé et de l'appelant et l'identifiant du superviseur est créée et stockée dans les seconds moyens de stockage MS2. Cette nouvelle règle pourra alors être utilisée lors des prochains appels entre ces deux personnes.

En variante ou en complément, une option applicative peut par exemple permettre à un salarié appelant de requérir, lorsqu'il initie son appel, la création d'une règle de supervision (au moins partielle) à usage momentané (ou virtuelle) pour ce seul appel. Cela peut par exemple se faire par fourniture par l'appelant d'un élément d'information, tel qu'un code alphanumérique (par exemple un préfixe ou une commande), lors de la composition du numéro de l'appelé. On notera que l'on peut par exemple prévoir un premier préfixe pour requérir la création d'une règle de supervision momentanée donnant une autorisation complète de supervision pour le couple d'identifiants de l'appelé et de l'appelant quel que soit le superviseur correspondant, un deuxième préfixe pour requérir la création d'une règle de supervision momentanée donnant une autorisation partielle de supervision pour le couple d'identifiants de l'appelé et de l'appelant quel que soit le superviseur correspondant, et un troisième suffixe pour requérir la création d'une règle de supervision momentanée interdisant la supervision pour le couple d'identifiants de l'appelé et de l'appelant quel que soit le superviseur correspondant. Dans ce cas, une nouvelle règle correspondant au préfixe fourni est créée momentanément pour le seul appel en cours entre l'appelé et l'appelant et appliquée par le module de communication MCX.

On notera, comme cela est illustré non limitativement sur les figures 1 et 2, que le dispositif de contrôle D peut éventuellement comprendre un module de configuration MCG chargé de contrôler le stockage des règles de supervision (qui ont été définies) dans les moyens de stockage MS2, et/ou de créer les règles à utilisation momentanée et les règles utilisables a posteriori en fonction des préfixes ou suffixes fournis.

Le dispositif de contrôle D selon l'invention, et notamment son module d'interrogation MI et ses éventuels seconds moyens de stockage MS2, peuvent être réalisés sous la forme de circuits électroniques, de modules logiciels (ou informatiques), ou d'une combinaison de circuits électroniques et de modules logiciels.

L'invention est particulièrement avantageuse car elle permet à une entreprise de déployer un service de supervision (et donc de contrôle) d'appels entrants et/ou sortants tout en assurant à ses salariés que leurs appels seront supervisés en fonction de règles de supervision qu'ils auront eux-mêmes définies ou approuvées.

L'invention ne se limite pas aux modes de réalisation de dispositif de contrôle, d'équipement de communication et de procédé de contrôle décrits ci-avant, seulement à titre d'exemple, mais elle englobe toutes les variantes que pourra envisager l'homme de l'art dans le cadre des revendications ci-après.

## Revendications

1. Procédé de contrôle d'autorisations de supervision d'appels, **caractérisé en ce qu'**il consiste, lorsqu'un terminal de communication (T1) d'un appelant appelle un terminal de communication (T2) d'un appelé, i) à déterminer si un identifiant d'appelant associé audit terminal (T1) de l'appelant est associé à un identifiant de l'appelé au sein d'au moins une règle autorisant ou interdisant au moins partiellement la supervision des appels entre ledit appelant et ledit appelé par au moins un superviseur d'appels dudit appelé ou appelant, et ii) en cas de règle autorisant au moins partiellement la supervision dudit appel, à autoriser au moins l'avertissement d'un terminal (T3) dudit superviseur d'appels de l'appelé ou de l'appelant, tandis qu'en cas de règle interdisant la supervision dudit appel, à interdire l'avertissement d'un terminal (T3) dudit superviseur d'appels de l'appelé ou de l'appelant.

2. Procédé selon la revendication 1, **caractérisé en ce qu'**au ii), en l'absence de règle concernant ledit appel, on autorise la supervision au moins partielle dudit terminal (T3) du superviseur d'appels de l'appelé ou de l'appelant.

3. Procédé selon la revendication 1, **caractérisé en ce qu'**au ii), en l'absence de règle concernant ledit appel, on interdit la supervision dudit terminal (T3) dudit superviseur d'appels de l'appelé ou de l'appelant.

4. Procédé selon l'une des revendications 1 à 3, **caractérisé en ce que** l'on définit une règle de supervision préalablement à un appel en établissant une correspondance entre un identifiant, un autre identifiant et une autorisation ou une interdiction au moins partielle de supervision d'appel par au moins un superviseur d'appels.

5. Procédé selon l'une des revendications 1 à 4, **caractérisé en ce que** l'on définit une règle de supervision en établissant pendant un appel une correspondance entre un identifiant, un autre identifiant et une autorisation ou une interdiction au moins partielle de supervision d'appel par au moins un superviseur d'appels.

6. Procédé selon l'une des revendications 1 à 5, **caractérisé en ce qu'**on définit une règle de supervision après que la communication ait été établie et supervisée entre ledit terminal de l'appelant et ledit terminal de l'appelé, par fourniture par ledit appelant ou ledit appelé d'un élément d'information spécifiant qu'une règle prenant en compte ledit appelant et ledit appelé doit être établie entre eux et pour leur superviseur d'appels.

7. Procédé selon l'une des revendications 1 à 6, **caractérisé en ce qu'**on définit une règle de supervision à usage momentané lors de l'initiation de l'appel entre ledit terminal de l'appelant et ledit terminal de l'appelé, par fourniture par ledit appelant d'un élément d'information spécifiant qu'une règle prenant en compte ledit appelant et ledit appelé doit être momentanément établie pour la durée de leur appel.

8. Procédé selon l'une des revendications 1 à 7, **caractérisé en ce qu'**au ii), en cas d'appel sortant d'un terminal (T2) d'un appelant, on délivre l'autorisation ou l'interdiction au moins partielle de supervision après que la communication ait été établie entre le terminal (T2) de l'appelant et le terminal (T1) de l'appelé.

9. Procédé selon l'une des revendications 1 à 8, **caractérisé en ce qu'**au ii), en cas d'appel entrant d'un terminal (T1) d'un appelant, on délivre l'autorisation ou l'interdiction au moins partielle de supervision avant que la communication ait été établie entre le terminal (T1) de l'appelant et le terminal (T2) de l'appelé.

10. Dispositif (D) de contrôle d'autorisations de supervision d'appels, **caractérisé en ce qu'**il comprend des moyens d'interrogation (MI) agencés, lorsqu'ils sont avertis qu'un terminal de communication (T1) d'un appelant tente d'appeler un terminal de communication (T2) d'un appelé, i) pour accéder à des moyens de stockage (MS2), stockant des règles autorisant ou interdisant chacune une supervision au moins partielle des appels entre un appelant, désigné par un identifiant d'appelant, et un appelé, désigné par un identifiant d'appelé, par au moins un superviseur d'appels, de manière à déterminer si l'identifiant d'appelant, associé audit terminal de l'appelant (T1), est associé à un identifiant de l'appelé au sein d'au moins une règle, et ii) en cas de règle autorisant au moins partiellement la supervision dudit appel, pour autoriser au moins l'avertissement d'un terminal (T3) dudit superviseur d'appels de l'appelé ou de l'appelant, tandis qu'en cas de règle interdisant la supervision dudit appel, pour interdire l'avertissement d'un terminal (T3) dudit superviseur d'appels de l'appelé ou de l'appelant.

11. Dispositif selon la revendication 10, **caractérisé en ce qu'**il comprend lesdits moyens de stockage (MS2).

12. Dispositif selon l'une des revendications 10 et 11, **caractérisé en ce que** lesdits moyens d'interrogation (MI) sont agencés, en l'absence de règle concernant ledit appel, pour autoriser la supervision au moins partielle dudit terminal (T3) du superviseur d'appels de l'appelé ou de l'appelant.

13. Dispositif selon l'une des revendications 10 et 11, **caractérisé en ce que** lesdits moyens d'interrogation (MI) sont agencés, en l'absence de règle concernant ledit appel, pour interdire la supervision dudit terminal (T3) dudit superviseur d'appels de l'appelé ou de l'appelant.

14. Dispositif selon l'une des revendications 10 à 13, **caractérisé en ce qu'**il comprend des moyens de configuration (MCG) agencés pour contrôler le stockage desdites règles de supervision dans lesdits moyens de stockage (MS2).

15. Dispositif selon l'une des revendications 10 à 14, **caractérisé en ce qu'**il comprend des moyens de configuration (MCG) agencés pour définir une règle de supervision en cas de réception, consécutivement à l'établissement d'une communication entre un terminal d'un appelant et un terminal d'un appelé et à la supervision de cette communication par un superviseur d'appels, d'un élément d'information fourni par ledit appelant ou ledit appelé et spécifiant qu'une règle doit être établie pour ledit appelant, ledit appelé et ledit superviseur d'appels.

16. Dispositif selon l'une des revendications 10 à 15, **caractérisé en ce qu'**il comprend des moyens de configuration (MCG) agencés pour définir une règle de supervision à usage momentané en cas de réception, consécutivement à l'initiation d'une communication entre un terminal d'un appelant et un terminal d'un appelé, d'un élément d'information fourni par ledit appelant et spécifiant qu'une règle doit être établie pour ledit appelant et ledit appelé pour la durée de leur appel.

17. Equipement de communication (ST) **caractérisé en ce qu'**il comprend un dispositif de contrôle (D) selon l'une des revendications 10 à 16.

## Claims

1. A method for controlling call monitoring authorizations, **characterized in that** it consists, whenever a calling party's communication terminal (T1) calls a called party's communication terminal (T2), of i) determining whether a calling party identifier associated with said terminal (T1) of the calling party is associated with a called party identifier within at least one rule at least partially authorizing or prohibiting the monitoring of calls between said calling party and said called party by at least one call monitor of said called or calling party, and ii) if there is a rule at least partially authorizing the monitoring of said call, authorizing at least the notification of a terminal (T3) of said call monitor of the called or calling part, whereas if there is a rule prohibiting the monitoring of said call, prohibiting the notification of a terminal (T3) of said call monitor of the called or calling party.

2. A method according to claim 1, **characterized in that** in ii), in the absence of a rule concerning said call, the at least partial monitoring of said terminal (T3) of the call monitor of the called or calling party is authorized.

3. A method according to claim 1, **characterized in that** in ii), in the absence of a rule concerning said call, the monitoring of said terminal (T3) of said call monitor of the called or calling party is prohibited.

4. A method according to one of the claims 1 to 3, **characterized in that** a monitoring rule is defined prior to a call by establishing a match between an identifier, another identifier, and an at least partial authorization or prohibition of call monitoring by at least one call monitor.

5. A method according to one of the claims 1 to 4, **characterized in that** a monitoring rule is defined by establishing, during a call, a match between an identifier, another identifier, and an at least partial authorization or prohibition of call monitoring by at least one call monitor.

6. A method according to one of the claims 1 to 5, **characterized in that** a monitoring rule is defined after the communication has been established and monitored between said terminal of the calling party and said terminal of the called party, by said calling or said called party providing an element of information specifying that a rule taking said calling and said called party into account must be established between them and for their call monitor.

7. A method according to one of the claims 1 to 6, **characterized in that** a monitoring rule is defined for momentary usage when the call is initiated between said terminal of the calling party and said terminal of the called party, by said calling party providing an element of information specifying that a rule taking said calling and said called party into account must be momentarily established for the duration of their call.

8. A method according to one of the claims 1 to 7, **characterized in that** in ii), in the event of a call coming from a calling party's terminal (T2) the at least partial authorization or prohibition is delivered after the communication had been established between the terminal (T2) of the calling party and the terminal (T1) of the called party.

9. A method according to one of the claims 1 to 8, **characterized in that** in ii), in the event of a call coming from a calling party's terminal (T1) the at least partial authorization or prohibition is delivered before the communication had been established between the terminal (T1) of the calling party and the terminal (T2) of the called party.

10. A device (D) for controlling call monitoring authorizations, **characterized in that** it comprises querying means (MI) operative, whenever they are notified that a communication terminal (T1) of a calling party is attempting to call a communication terminal (T2) of a called party, i) to access storage means (MS2), storing rules each authorizing or prohibiting an at least partial monitoring of the calls between a calling party, designated by a calling party identifier, and a called party, designated by a called party identifier, by at least one call monitor, so as to determine whether the calling party identifier, associated with said terminal (T1) of the calling party, is associated with a called party identifier within at least one rule, and ii) if there is a rule at least partially authorizing the monitoring of said call, to authorize at least one notification of a terminal (T3) of said call monitor of the called or calling party, while in the event of a rule prohibiting the monitoring of said call, to prohibit the notification of a terminal (T3) of said call monitor of the called or calling party.

11. A device according to claim 10, **characterized in that** it comprises said storage means (MS2).

12. A device according to one of the claims 10 and 11, **characterized in that** said querying means (MI) are operative, in the absence of a rule concerning said call, to authorize the at least partial monitoring of said terminal (T3) of the call monitor of the called or calling party.

13. A device according to one of the claims 10 and 11, **characterized in that** said querying means (MI) are operative, in the absence of a rule concerning said call, to prohibit the monitoring of said terminal (T3) of the call monitor of the called or calling party.

14. A device according to one of the claims 10 to 13, **characterized in that** it comprises configuration means (MCG) operative to control the storage of said monitoring rules within said storage means (MS2).

15. A device according to one of the claims 10 to 14, **characterized in that** it comprises configuration means (MCG) operative to define a monitoring rule in the event that, subsequent to the establishment of a communication between a calling party's terminal and a called party's terminal and to the monitoring of that communication by a call monitor, an element of information provided by said calling or called party is received specifying that a rule must be established for said calling party, said called party, and said call monitor.

16. A device according to one of the claims 10 to 15, **characterized in that** it comprises configuration means (MCG) operative to define a monitoring rule for momentary usage in the event that, subsequent to the initiation of a communication between a calling party's terminal and a called party's terminal, an element of information provided by said calling party is received specifying that a rule must be established for said calling party and said called party for the duration of their call.

17. A communication device (ST) **characterized in that** it comprises a control device (D) according to one of the claims 10 to 16.

## Patentansprüche

1. Verfahren zur Kontrolle der Überwachungsbefugnisse von Anrufen, **dadurch gekennzeichnet, dass** es darin besteht, wenn ein Kommunikationsendgerät (T1) eines Anrufenden ein Kommunikationsendgerät (T2) eines Angerufenen anruft, i) zu ermitteln, ob eine mit dem besagten Endgerät (T1) des Anrufenden assoziierte Kennung des Anrufenden mit einer Kennung des Angerufenen innerhalb mindestens einer Regel, welche zumindest teilweise die Überwachung der Anrufe zwischen dem besagten Anrufenden und dem besagten Angerufenen durch mindestens einen Supervisor von Anrufen des besagten Angerufenen oder Anrufenden genehmigt oder untersagt, assoziiert ist, und ii) im Fall einer Regel, welche die Überwachung des besagten Anrufs zumindest teilweise genehmigt, zumindest die Benachrichtigung eines Endgeräts (T3) des besagten Supervisors von Anrufen des Angerufenen oder des Anrufenden zu genehmigen, und im Fall einer Regel, welche die Überwachung des besagten Anrufs untersagt, die Benachrichtigung eines Endgeräts (T3) des besagten Supervisors von Anrufen des Angerufenen oder des Anrufenden zu untersagen.

2. Verfahren nach Anspruch 1, **dadurch gekennzeichnet, dass** man in ii), wenn keine den besagten Anruf betreffende Regel besteht, die zumindest teilweise Überwachung des besagten Endgeräts (T3) des Supervisors von Anrufen des Angerufenen oder des Anrufenden genehmigt.

3. Verfahren nach Anspruch 1, **dadurch gekennzeichnet, dass** man in ii), wenn keine den besagten Anruf betreffende Regel besteht, die Überwachung des besagten Endgeräts (T3) des besagten Supervisors von Anrufen des Angerufenen oder des Anrufenden untersagt.

4. Verfahren nach einem der Ansprüche 1 bis 3, **dadurch gekennzeichnet, dass** man vor einem Anruf eine Überwachungsregel definiert, indem eine Übereinstimmung zwischen einer Kennung, einer anderen Kennung und einer zumindest teilweisen Anrufüberwachungsgenehmigung oder -untersagung durch mindestens einen Supervisor von Anrufen ermittelt wird.

5. Verfahren nach einem der Ansprüche 1 bis 4, **dadurch gekennzeichnet, dass** man eine Überwachungsregel definiert, indem während eines Anrufs eine Übereinstimmung zwischen einer Kennung, einer anderen Kennung und einer zumindest teilweisen Genehmigung oder Untersagung der Anrufüberwachung durch mindestens einen Supervisor von Anrufen ermittelt wird.

6. Verfahren nach einem der Ansprüche 1 bis 5, **dadurch gekennzeichnet, dass** man eine Überwachungsregel definiert, nachdem die Verbindung zwischen dem besagten Endgerät des Anrufenden und dem besagten Endgerät des Angerufenen hergestellt und überwacht wurde, indem ein Informationselement, welches angibt, dass eine Regel, die den besagten Anrufenden und den besagten Angerufenen berücksichtigt, zwischen diesen und für deren Anruf-Supervisor erstellt werden muss, von dem besagten Anrufenden oder dem besagten Angerufenen bereitgestellt wird.

7. Verfahren nach einem der Ansprüche 1 bis 6, **dadurch gekennzeichnet, dass** man eine Überwachungsregel für die momentane Verwendung während der Initiierung des Anrufs zwischen dem besagten Endgerät des Anrufenden und dem besagten Endgerät des Angerufenen definiert, indem ein Informationselement, welches angibt, dass momentan eine Regel, die den besagten Anrufenden und den besagten Angerufenen berücksichtigt, für die Dauer des Anrufs erstellt werden muss, von dem besagten Anrufenden bereitgestellt wird.

8. Verfahren nach einem der Ansprüche 1 bis 7, **dadurch gekennzeichnet, dass** man in ii) im Fall eines von einem Endgerät (T2) eines Anrufenden ausgehenden Anrufs eine zumindest teilweise Genehmigung oder Untersagung der Überwachung erteilt, nachdem die Verbindung zwischen dem Endgerät (T2) des Anrufenden und dem Endgerät (T1) des Angerufenen hergestellt wurde.

9. Verfahren nach einem der Ansprüche 1 bis 8, **dadurch gekennzeichnet, dass** man in ii) im Fall eines von einem Endgerät (T1) eines Anrufenden eingehenden Anrufs die zumindest teilweise Genehmigung oder Untersagung der Überwachung erteilt, bevor die Verbindung zwischen dem Endgerät (T1) des Anrufenden und dem Endgerät (T2) des Angerufenen hergestellt wurde.

10. Vorrichtung (D) zur Kontrolle von Anrufüberwachungsgenehmigungen, **dadurch gekennzeichnet, dass** sie Abfragemittel (MI) umfasst, die, wenn sie darüber benachrichtigt werden, dass ein Kommunikationsendgerät (T1) eines Anrufenden versucht, ein Kommunikationsendgerät (T2) eines Angerufenen anzurufen, dazu ausgelegt sind, i) auf Speichermittel (MS2) zuzugreifen, welche Regeln speichert, die jeweils eine zumindest teilweise Überwachung der Anrufe zwischen einem Anrufenden, welcher durch eine Kennung des Anrufenden bezeichnet wird, und einem Angerufenen, welcher durch eine Kennung des Angerufenen bezeichnet wird, durch mindestens einen Anruf-Supervisor genehmigen oder untersagen, um zu ermitteln, ob die Kennung des Anrufenden, welche mit dem besagten Endgerät des Anrufenden (T1) assoziiert ist, innerhalb mindestens einer Regel mit einer Kennung des Angerufenen assoziiert ist, und ii) im Fall einer Regel, welche zumindest teilweise die Überwachung des besagten Anrufs genehmigt, zumindest die Benachrichtigung eines Endgeräts (T3) des besagten Supervisors von Anrufen des Angerufenen oder des Anrufenden zu genehmigen, und im Fall einer Regel, welche die Überwachung des besagten Anrufs untersagt, die Benachrichtigung eines Endgeräts (T3) des besagten Supervisors von Anrufen des Angerufenen oder des Anrufenden zu untersagen.

11. Vorrichtung nach Anspruch 10, **dadurch gekennzeichnet, dass** sie die besagten Speichermittel (MS2) umfasst.

12. Vorrichtung nach einem der Ansprüche 10 und 11, **dadurch gekennzeichnet, dass** die besagten Abfragemittel (MI) dazu ausgelegt sind, die zumindest teilweise Überwachung des besagten Endgeräts (T3) des Supervisors von Anrufen des Angerufenen oder des Anrufenden zu genehmigen, wenn keine Regel für den besagten Anruf besteht.

13. Vorrichtung nach einem der Ansprüche 10 und 11, **dadurch gekennzeichnet, dass** die besagten Abfragemittel (MI) dazu ausgelegt sind, die Überwachung des besagten Endgeräts (T3) des besagten Supervisors von Anrufen des Angerufenen oder des Anrufenden zu untersagen, wenn keine Regel für den besagten Anruf besteht.

14. Vorrichtung nach einem der Ansprüche 10 bis 13, **dadurch gekennzeichnet, dass** sie Konfigurationsmittel (MCG) umfasst, die für die Kontrolle der Speicherung der besagten Überwachungsregeln in den besagten Speichermitteln (MS2) ausgelegt sind.

15. Vorrichtung nach einem der Ansprüche 10 bis 14, **dadurch gekennzeichnet, dass** sie Konfigurationsmittel (MCG) umfasst, welche dazu ausgelegt sind, eine Überwachungsregel zu definieren, wenn im Anschluss an die Herstellung einer Kommunikation zwischen einem Endgerät eines Anrufenden und einem Endgerät eines Angerufenen und an die Überwachung dieser Kommunikation durch einen Anruf-Supervisor ein von dem besagten Anrufenden oder dem besagten Angerufenen bereitgestelltes Informationselement empfangen wird, welches angibt, dass eine Regel für den besagten Anrufenden, den besagten Angerufenen und den besagten Anruf-Supervisor erstellt werden muss.

16. Vorrichtung nach einem der Ansprüche 10 bis 15, **dadurch gekennzeichnet, dass** sie Konfigurationsmittel (MCG) umfasst, die dazu ausgelegt sind, eine Überwachungsregel für die momentane Anwendung im Fall des Empfangs, im Anschluss an die Initiierung einer Kommunikation zwischen einem Endgerät eines Anrufenden und einem Endgerät eines Angerufenen, eines von dem besagten Anrufenden bereitgestellten Informationselements, welches angibt, dass eine Regel für den besagten Anrufenden und den besagten Angerufenen für die Dauer des Anrufs erstellt werden muss, zu definieren.

17. Kommunikationsgerät (ST), **dadurch gekennzeichnet, dass** es eine Kontrollvorrichtung (D) gemäß einem der Ansprüche 10 bis 16 umfasst.
